# EUROPEAN PATENT SPECIFICATION

(11) **EP 3 392 485 B1**
(45) Date of publication and mention of the grant of the patent: **25.12.2019**
(21) Application number: 18162782.9
(22) Date of filing: 20.03.2018
(51) Int. Cl.: F02C 7/22, F02C 9/28, F01D 21/14, F02C 7/232, F02C 9/46

(54) **FUEL CONTROL SYSTEM**
KRAFTSTOFFREGELUNGSSYSTEM
SYSTÈME DE RÉGULATION DE CARBURANT

(30) Priority: 20.04.2017 GB 201706269
(43) Date of publication of application: 24.10.2018
(73) Proprietor: Rolls-Royce plc, London SW1E 6AT (GB)
(72) Inventor: Renold-Smith, William, Derby, Derbyshire DE24 8BJ (GB); Horobin, Marcus, Derby, Derbyshire DE24 8BJ (GB)
(74) Representative: Rolls-Royce plc

(56) References cited:
- EP-A2- 0 398 839
- US-A- 4 648 797
- US-A- 5 775 090
- US-A1- 2008 275 597

## Description

### Field of the Invention

The present invention relates to a fuel control system for a gas turbine engine.

### Background

Fuel control systems for use in controlling the supply of fuel to an aircraft engine generally comprise a control unit, which may be part of the engine electronic controller (EEC), and a hydro-mechanical unit controlled by the control unit. For example, the hydro-mechanical unit may include a metering valve operable to control the rate at which pressurised fuel passes from a supply line to a delivery line. Typically, the hydro-mechanical unit also includes a pressure drop control arrangement (e.g. comprising a pressure drop control valve and an associated spill valve) which is operable to maintain a substantially constant pressure drop across the metering valve, and a pressure raising and shut-off valve can then control the passage of fuel from the delivery line to one or more burner manifolds, the pressure raising and shut-off valve serving, in use, to maintain a minimum fuel pressure in a part of the fuel control system upstream thereof, so as to ensure that any fuel pressure operated devices arranged to receive fuel under pressure from the fuel control system can operate correctly.

The hydro-mechanical unit receives the pressurised fuel from a pumping unit that is driven by, and so operates at a speed related to the operating speed of, the associated engine. There is a need to provide within the fuel control system a mechanism whereby power or thrust can be controlled in the event of a malfunctioning fuel metering valve causing fuel flow upward runaway of the engine. For example, in the case of a turboprop engine, such a mechanism acts to prevent over-torque in the propeller system.

One option is to insert logic in the control unit implementing an engine power threshold (which can be scheduled against speed of the low pressure shaft driving the propeller system to be effectively a torque threshold) which when crossed causes the fuel control system to implement an emergency fuel chop. However, there is a concern that this logic could be incorrectly activated if spurious torque spikes occur e.g. due to electrical interference.

A further consideration is that it is generally desirable to reduce torque thresholds so that the risk of unacceptably high torques in the propeller system occurring is reduced. However, reducing the torque threshold results in an increased risk of incorrect activation due to spurious torque spikes.

EP 0,398,839 discloses a helicopter control in which the speed of the free turbine of the engine is compared with the helicopter rotor speed. US 2008/275597 discloses a fuel control system according to the prior art.

### Summary

Accordingly, in a first aspect the present invention provides a fuel control system for a gas turbine engine having a core engine comprising at least one core engine spool in which a compressor and a turbine are interconnected by a shaft, the system including: a metering valve operable to control the rate at which pressurised fuel is delivered to a combustor of the engine, when the fuel control system is installed and in use;
a first engine sensor which determines a power output of the engine;
a control unit which is configured to compare the determined power output with a value of a power threshold, and to command a reduction in fuel supplied to the engine when the determined power output exceeds the power threshold value; and
a second engine sensor which measures the rate of change of rotational speed of the core engine spool;
wherein the control unit is further configured to adjust the power threshold value as a function of the measured rate of change of speed of the core engine spool.

Thus, advantageously, the system helps to prevent incorrect activation of emergency fuel reductions by effectively confirming fuel flow upward runaway with a further, generally independent parameter, which is the rate of change of speed of the core engine spool.

In a further aspect, the present invention provides a gas turbine engine having a core engine comprising at least one core engine spool in which a compressor and a turbine are interconnected by a shaft, and further comprising a fuel control system according to the first aspect.

In a further aspect, the present invention provides a method of controlling fuel supplied to a gas turbine engine having a core engine comprising at least one core engine spool in which a compressor and a turbine are interconnected by a shaft, the method including:
determining a power output of the engine;
measuring the rate of change of rotational speed of the core engine spool;
adjusting a value of a power threshold as a function of the measured rate of change of speed of the core engine spool;
comparing the determined power output with the value of the power threshold, and
reducing the fuel supplied to the engine when the determined power output exceeds the power threshold value.

Thus the method corresponds to the fuel control system of the first aspect. Indeed, in a further aspect, the present invention provides the use of the fuel control system of the first aspect to control fuel supplied to a gas turbine engine having a core engine comprising at least one core engine spool in which a compressor and a turbine are interconnected by a shaft.

Optional features of the invention will now be set out. The reduction in fuel supplied to the engine can be a complete cut in supplied fuel, i.e. an emergency fuel chop.

The engine may be a turboprop engine further having a propeller driven by a low pressure spool including a free power turbine and a shaft which transmits power from the free power turbine to the propeller. For example, the first engine sensor may determine the power output of the engine by measuring twist of the shaft of the low pressure spool, and by measuring rotational speed of the low pressure spool.

The control unit may be further configured to also adjust the power threshold value as a function of the sensed power output of the engine.

The control unit may adjust the power threshold value by increasing the power threshold value when the measured rate of change of speed of the core engine spool is zero or negative. The power threshold value may be increased relative to the power threshold value when the measured rate of change of speed of the core engine spool is positive. For example, the increase may be a step change in power threshold value at zero rate of change of speed or at a predetermined negative rate of change of speed.

Additionally or alternatively, the control unit may adjust the power threshold value by decreasing the power threshold value when the measured rate of change of speed of the core engine spool is greater than a predetermined positive rate of change of speed. The power threshold value may be decreased relative to the power threshold value when the measured rate of change of speed is less than the predetermined positive rate of change of speed. For example, the decrease may be a step change in power threshold value at the predetermined positive rate of change of speed.

The adjustments to the power threshold value are typically reversible. However, the control unit may prevent further adjustments to the power threshold value as a function of the measured rate of change of speed of the core engine spool when the determined power output exceeds the power threshold value. In this way adjustments (and particularly step change adjustments) can be latched when fuel flow upward runaway events are confirmed.

The core engine may comprise a high pressure core engine spool and an intermediate pressure core engine spool. In this case, the second engine sensor may measure the rate of change of speed of the high pressure core engine spool or the intermediate pressure core engine spool.

Conveniently, the control unit can be a sub-system of an engine electronic controller of the engine.

The fuel control system may further include a metering valve operable to control the rate at which pressurised fuel is delivered to a combustor of the engine.

The fuel control system may further include a fuel shut-off valve commandable by the control unit. When the determined power output exceeds the power threshold value the fuel shut-off valve can implement the reduction in fuel supplied to the engine in the form of an emergency fuel chop.

### Brief Description of the Drawings

Embodiments of the invention will now be described by way of example with reference to the accompanying drawings in which:
Figure 1 is a schematic view of a turboprop aircraft propulsion unit;
Figure 2 shows schematically a fuel control system;
Figure 3 shows a schematic graph of engine power output against time for a fuel flow upward runaway event occurring at 15 s, the graph plotting power threshold value (OPP) and engine power output (PWR-LPT);
Figure 4 shows the graph of Figure 3, but combined with a graph of rate of change of rotational speed against time, and plotting the rate of change of rotational speed (Nldot) of an intermediate pressure spool; and
Figure 5 shows the graphs of Figure 4, but also plotting an adjusted power threshold value (OPP').

### Detailed Description and Further Optional Features

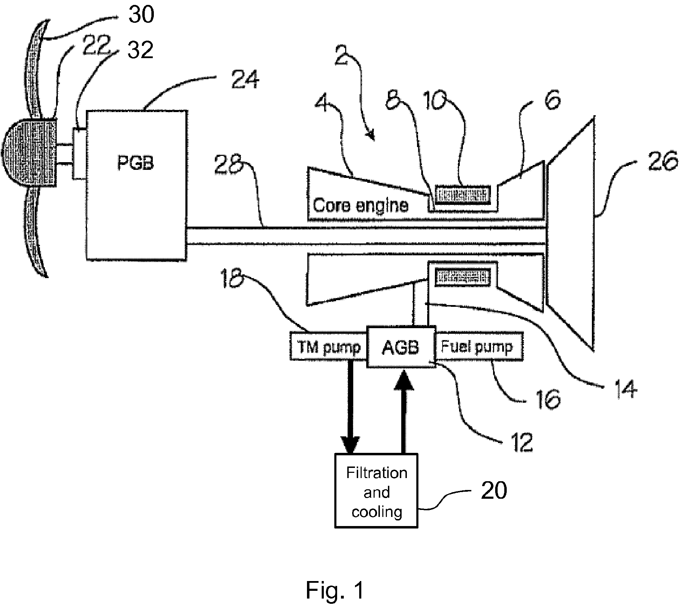

The propulsion unit shown in Figure 1 comprises a core engine 2 comprising a high pressure compressor 4 and a high pressure turbine 6 which are interconnected by a high pressure shaft 8. A combustor 10 is situated between the compressor 4 and the turbine 6. An accessory gearbox 12 has an input driven from the shaft 8 by means of a radial power off-take shaft 14. Outputs of the accessory gearbox 12 drive various components, including a fuel pump 16 which provides a pressurised fuel supply for the combustor 10, and a turbomachinery lubricant pump 18 which supplies lubricant, such as oil, to various systems of the engine, including the accessory gearbox 12 and bearings of the shaft 8. Lubricant supplied by the lubricant pump 18 is filtered and cooled by a filtering and cooling system 20.

A propeller 22 is driven through a propeller gearbox 24 by means of a low pressure, free power turbine 26, which transmits power to the propeller gearbox 24 through a low pressure shaft 28 which extends within the high pressure shaft 8. The low pressure shaft 28 and the turbine 26 constitute a low pressure spool of the propulsion unit, and the compressor 4, the turbine 6 and the high pressure shaft 8 constitute a high pressure spool. The propeller 22 comprises blades 30. The blades 30 have a variable pitch, which can be controlled by a pitch control unit 32.

In normal operation of the propulsion unit shown in FIG. 1, air is compressed by the compressor 4, and the compressed air is ignited in the combustor 10. The combustion products flow through the turbine 6 causing it to maintain rotation of the high pressure spool 4, 6, 8. Combustion products exhausted from the turbine 6 drive the turbine 26. The rotation of the turbine 26 is transferred by the shaft 28 to the propeller gearbox 24, from which the propeller 22 is driven. The pitch of the blades 30 is adjusted by means of the pitch control unit 32 to maintain low pressure shaft demanded speed.

It will be appreciated that the core engine 2 may comprise intermediate and high pressure spools instead of just the high pressure spool 4, 6, 8 shown in Figure 1, i.e. an intermediate pressure compressor may be provided in front of the high pressure compressor 4, with an intermediate pressure shaft connecting the intermediate pressure compressor to an intermediate pressure turbine provided between the high pressure 6 and free power 26 turbines. The intermediate pressure shaft then extends within the high pressure shaft 8 while the low pressure shaft 28 extends within the intermediate pressure shaft.

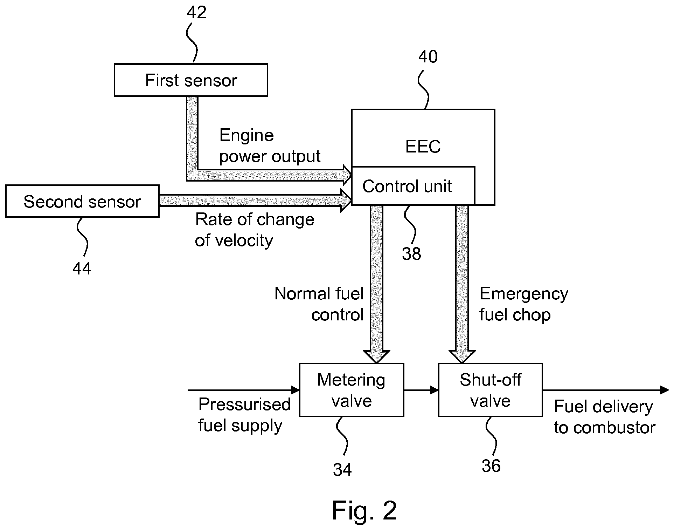

The engine has a fuel control system, shown schematically in Figure 2. The pressurised fuel provided by the fuel pump 16 is delivered to the combustor 10 via a fuel metering valve 34 and a pressure raising and shut-off valve 36. Under normal operating conditions, a control unit 38, which typically is a part of the engine's EEC 40, controls the metering valve to ensure that a correct amount of fuel is delivered for a desired operating condition of the engine. However, in the event of a malfunction of the fuel metering valve, the valve may send too much fuel to the combustor, potentially causing a problem of fuel flow upward runaway (FFUR). In particular, the FFUR may produce over-torque in the propeller system.

To address this problem, the control unit 38 compares the power output of the engine determined by a first engine sensor 42 with a value of a power threshold. For example, the first engine sensor may determine the engine power output by measuring the twist of the shaft 28 of the low pressure spool, and by measuring the rotational speed of the low pressure spool. The power threshold value may be scheduled by the control unit against rotational speed of the low pressure spool so that effectively the power threshold is a torque threshold. When the comparison of the engine power output with the determined power threshold shows that the power output has exceeded the threshold value, the control unit sends an emergency fuel chop command signal to the shut-off valve 36, thereby limiting the amount of over-torque.

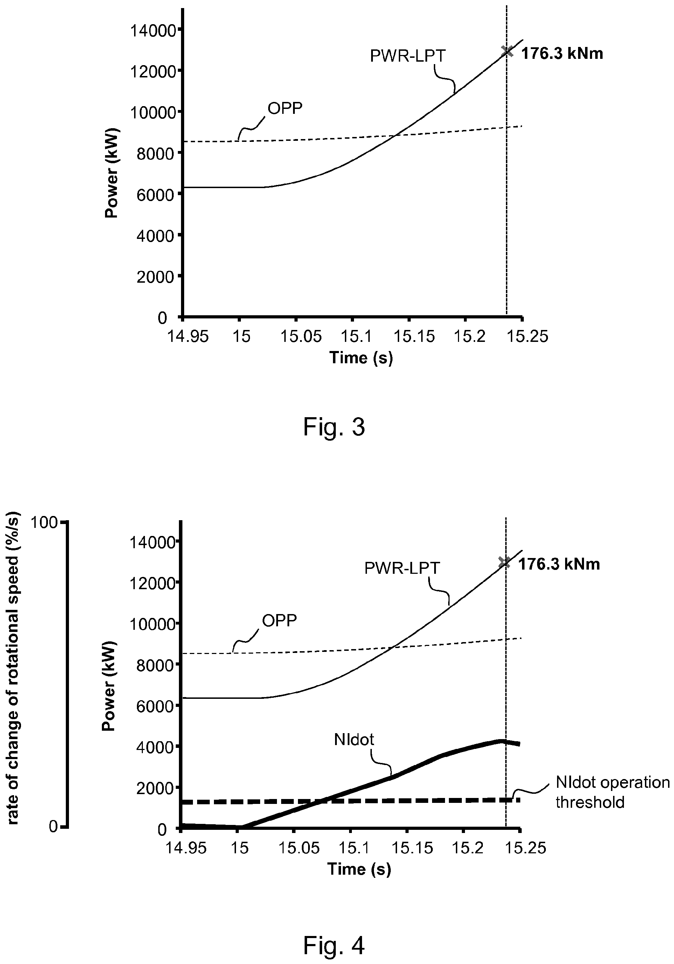

Figure 3 shows a schematic graph of power against time for an FFUR event occurring at 15s. The power threshold value (OPP - over power protection) is plotted with a dashed line. In this particular example, the OPP value is constant before 15s, but increases slightly thereafter as the rotational speed of the low pressure spool against which it is scheduled also increases (in this particular example) as a result of the FFUR event which causes a sudden increase in torque which in turn leads to a small increase in LP shaft speed due to the slightly slower response of the pitch control unit 32. Also plotted on the graph by a solid line is the engine power output (PWR-LPT - power from the low pressure turbine) determined by the first engine sensor 42.

To provide redundancy, a second, parallel set of measurements for the determination of engine power output may be made by another first engine sensor 42 and fed to the control unit 38.

In the absence of any adjustments of the OPP value, other than the relatively small changes caused by the scheduling against the rotational speed of the low pressure spool, the control unit 38 would take action to avert over-torque in the propeller system by arresting the FFUR only when PWR-LPT exceeds OPP, which occurs at about 15.14s in Figure 3. With a typical lag of about 0.1s before the control unit 38 can trigger a command signal to the shut-off valve 36 and the valve can act on that signal, the FFUR thus causes (in this particular example) a peak torque of about 176.3 kNm in the propeller system.

It may be desirable to reduce this peak torque. However, if the power threshold value OPP is simply lowered to produce a cross-point with the PWR-LPT line at an earlier time, then the risk that spurious torque spikes due to electrical interference might incorrectly activate the emergency fuel chop logic would be increased.

Figure 4 shows, therefore, the same schematic graph as Figure 3, but including a bold line plotting the rate of change of rotational speed (Nldot) of an intermediate pressure spool of the core engine. The scale of the vertical axis of the graph is appropriate for power measured in kW or rate of change of rotational speed in %/sec. Nldot is measured by a second engine sensor 44 (Figure 2) and fed to the control unit 38. This measurement can be performed indirectly by the second engine sensor. For example, the second engine sensor can sense shaft rotational speed, and the control unit can then calculate Nldot from the sensed speed. Also shown on Figure 4 is a suitable operation threshold (bold, dashed line) for Nldot at a predetermined positive rate of change of speed (about 13%/sec in the example). Nldot is zero before the FFUR event, but increases immediately when the event occurs at 15s. This behaviour of Nldot is thus used by the control unit 38 to adjust the power threshold value.

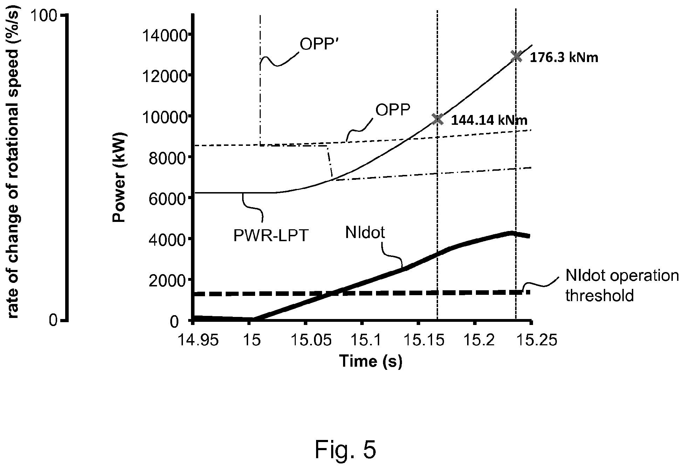

More particularly, Figure 5 shows the same schematic graph as Figure 4, but now including a dot-dashed line plotting an adjusted power threshold value (OPP'). When Nldot is zero or negative it is safe to lift the power threshold value entirely (i.e. set it to such a high value that it will not be crossed by PWR-LPT), as there is no risk of over-torque in the propeller system in this regime when the engine is not accelerating. Between zero Nldot and the predetermined operation threshold of Nldot, OPP' can be the same as the previous OPP, which provides adequate protection against relatively slow FFUR events. However, at and above the predetermined operation threshold for Nldot, OPP' can be lowered relative to the previous OPP (although still scheduled against rotational speed of the low pressure spool), thereby making the comparison between the engine power output and the power threshold value performed by the control unit 38 more sensitive to departures from normal behaviour of the engine power output, and thereby providing enhanced protection (i.e. a reduced reaction time) against relatively fast FFUR events. Thus effectively the adjusted power threshold value OPP' has a step change at zero Nldot and a further step change at the predetermined operation threshold for Nldot.

As shown on Figure 5, the effect of adjusting the power threshold value in this way is to reduce the time at which the control unit 38 detects the example FFUR occurring at 15s by about 0.07s to about 15.07s. This results in the emergency fuel chop being performed earlier such that the peak torque in the propeller system is reduced (in this particular example) to about 144.14 kNm.

Effectively, the Nldot signal allows the control unit 38 to better differentiate between real FFUR events and spurious torque spikes, and to improve its response to these events by reducing the power threshold values when the Nldot is measured to be above a predetermined operation threshold (which can be determined empirically). The reduction can be temporary if a shut-off condition is not reached (i.e. PWR-LPT does not exceed OPP'). But otherwise the reduction can be permanent (i.e. the step change to the threshold latches).

Thus the control unit 38 acts to prevent incorrect activation of FFUR emergency fuel chop logic by confirming the FFUR event with another parameter, which is a core engine spool rate of change of rotational speed. The anticipatory logic of the control unit improves the efficacy of FFUR detection by reducing the FFUR power threshold value for abnormally high core engine spool accelerations, and helps to avoid incorrect FFUR detection due to spurious torque spikes by increasing the FFUR power threshold value when the core engine spool is not accelerating.

Other confirmatory parameters could be used instead of, or in addition to, the Nldot signal. For example, the control unit 38 could also adjust the power threshold value on the basis of a measurement of the rate of change of rotational speed of the high pressure spool of the core engine.

Although described above in relation to a turboprop aircraft propulsion unit, the present invention can also be applied to e.g. turbofan engines, helicopter engines, and industrial and marine gas turbine engines. In the context of a turbofan engines, the determined power output can be that of the fan (or a proxy thereof) or the gearbox in the case of a geared turbofan.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A fuel control system for a gas turbine engine having a core engine (2) comprising at least one core engine spool in which a compressor (4) and a turbine (6) are interconnected by a shaft (8), the system including:
a metering valve (34) operable to control the rate at which pressurised fuel is delivered to a combustor of the engine, when the fuel control system is installed and in use;
a first engine sensor (42) which determines a power output of the engine;
a control unit (38) which is configured to compare the determined power output with a power threshold value, and to command a reduction in fuel supplied to the engine when the determined power output exceeds the power threshold value; and
a second engine sensor (44) which measures the rate of change of rotational speed of the core engine spool;
**characterised in that** the control unit (38) is further configured to adjust the power threshold value as a function of the measured rate of change of speed of the core engine spool.

2. A fuel control system according to claim 1, wherein the engine is a turboprop engine further having a propeller (22) driven by a low pressure spool including a free power turbine (26) and a shaft (28) which transmits power from the free power turbine (26) to the propeller (22).

3. A fuel control system according to claim 2, wherein the first engine sensor (42) determines the power output of the engine by measuring twist of the shaft (28) of the low pressure spool, and by measuring rotational speed of the low pressure spool.

4. A fuel control system according to any one of the previous claims, wherein the control unit (38) is configured to adjust the power threshold value by increasing the power threshold value when the measured rate of change of speed of the core engine spool is zero or negative.

5. A fuel control system according to claim 4, wherein the increase is a step change in power threshold value at zero rate of change of speed or at a predetermined negative rate of change of speed.

6. A fuel control system according to any one of the previous claims, wherein the control unit (38) is configured to adjust the power threshold value by decreasing the power threshold value when the measured rate of change of speed of the core engine spool is greater than a predetermined positive rate of change of speed.

7. A fuel control system according to claim 6, wherein the decrease is a step change in power threshold value at the predetermined positive rate of change of speed.

8. A fuel control system according to any one of the previous claims, wherein the adjustments to the power threshold value are reversible except that the control unit (38) is configured to prevent further adjustments to the power threshold value as a function of the measured rate of change of speed of the core engine spool when the determined power output exceeds the power threshold value.

9. A fuel control system according to any one of the previous claims, wherein the core engine (2) comprises a high pressure core engine spool and an intermediate pressure core engine spool.

10. A fuel control system according to claim 9, wherein the second engine sensor (44) measures the rate of change of speed of the high pressure core engine spool or the intermediate pressure core engine spool.

11. A fuel control system according to any one of the previous claims, wherein the fuel control system may further include a fuel shut-off valve (36) commandable by the control unit (38) when the determined power output exceeds the power threshold value to implement the reduction in fuel supplied to the engine in the form of an emergency fuel chop.

12. A gas turbine engine having a core engine (2) comprising at least one core engine spool in which a compressor (4) and a turbine (6) are interconnected by a shaft (8), and further comprising a fuel control system according to any one of the previous claims.

13. A method of controlling fuel supplied to a gas turbine engine having a core engine (2) comprising at least one core engine spool in which a compressor (4) and a turbine (6) are interconnected by a shaft (8), the method including:
determining a power output of the engine;
measuring the rate of change of rotational speed of the core engine spool;
adjusting a power threshold value as a function of the measured rate of change of speed of the core engine spool;
comparing the determined power output with the value of the power threshold, and
reducing the fuel supplied to the engine when the determined power output exceeds the power threshold value.

## Patentansprüche

1. Kraftstoffregelungssystem für einen Gasturbinenmotor mit einem Kernmotor (2), der mindestens eine Kernmotorspule umfasst, worin ein Kompressor (4) und eine Turbine (6) durch eine Welle (8) miteinander verbunden sind, wobei das System folgendes aufweist:
ein Dosierventil (34), das so betriebsfähig ist, dass es die Rate, mit welcher unter Druck stehender Kraftstoff einer Brennkammer des Motors zugeführt wird, regelt, wenn das Kraftstoffregelungssystem installiert ist und sich im Einsatz befindet;
einen ersten Motorsensor (42), der eine Leistungsabgabe des Motors bestimmt;
eine Steuereinheit (38), die so gestaltet ist, dass sie die bestimmte Leistungsabgabe mit einem Leistungsschwellenwert vergleicht, und dass sie eine reduzierte Kraftstoffzufuhr an den Motor anweist, wenn die bestimmte Leistungsabgabe den Leistungsschwellenwert übersteigt; und
einen zweiten Motorsensor (44), der eine Änderungsrate der Drehzahl der Kernmotorspule misst;
**dadurch gekennzeichnet, dass** die Steuereinheit (38) ferner so gestaltet ist, dass sie den Leistungsschwellenwert als eine Funktion der gemessenen Änderungsrate der Geschwindigkeit der Kernmotorspule anpasst.

2. Kraftstoffregelungssystem nach Anspruch 1, wobei der Motor ein Turbopropmotor ist, der ferner einen Propeller (22) aufweist, der durch eine Niederdruckspule angetrieben wird, mit einer freien Arbeitsturbine (26) und einer Welle (28), welche Leistung von der freien Arbeitsturbine (26) auf den Propeller (22) überträgt.

3. Kraftstoffregelungssystem nach Anspruch 2, wobei der erste Motorsensor (42) die Leistungsabgabe des Motors durch Messen der Drehung der Welle (28) der Niederdruckspule sowie durch Messen der Drehzahl der Niederdruckspule bestimmt.

4. Kraftstoffregelungssystem nach einem der vorstehenden Ansprüche, wobei die Steuereinheit (38) so gestaltet ist, dass sie den Leistungsschwellenwert durch Erhöhen des Leistungsschwellenwerts anpasst, wenn die gemessene Änderungsrate der Geschwindigkeit der Kernmotorspule Null oder negativ ist.

5. Kraftstoffregelungssystem nach Anspruch 4, wobei die Erhöhung eine stufenweise Anpassung des Leistungsschwellenwerts mit einer Änderungsgeschwindigkeit mit einer Rate von Null oder einer vorbestimmten negativen Rate der Geschwindigkeitsänderung ist.

6. Kraftstoffregelungssystem nach einem der vorstehenden Ansprüche, wobei die Steuereinheit (38) so gestaltet ist, dass sie den Leistungsschwellenwert durch Verringern des Leistungsschwellenwerts anpasst, wenn die gemessene Änderungsrate der Geschwindigkeit der Kernmotorspule größer ist als eine vorbestimmte positive Änderungsrate der Geschwindigkeit.

7. Kraftstoffregelungssystem nach Anspruch 6, wobei die Verringerung eine stufenweise Anpassung des Leistungsschwellenwerts mit der vorbestimmten positiven Änderungsrate der Geschwindigkeit ist.

8. Kraftstoffregelungssystem nach einem der vorstehenden Ansprüche, wobei die Anpassungen des Leistungsschwellenwerts umkehrbar sind, mit der Ausnahme, dass die Steuereinheit (38) so gestaltet ist, dass sie weitere Anpassungen des Leistungsschwellenwerts als eine Funktion der gemessenen Änderungsrate der Geschwindigkeit der Kernmotorspule verhindert, wenn die bestimmte Leistungsabgabe den Leistungsschwellenwert übersteigt.

9. Kraftstoffregelungssystem nach einem der vorstehenden Ansprüche, wobei der Kernmotor (2) eine Hochdruck-Kernmotorspule und eine Zwischendruck-Kernmotorspule umfasst.

10. Kraftstoffregelungssystem nach Anspruch 9, wobei der zweite Motorsensor (44) die Änderungsrate der Geschwindigkeit der Hochdruck-Kernmotorspule oder der Zwischendruck-Kernmotorspule misst.

11. Kraftstoffregelungssystem nach einem der vorstehenden Ansprüche, wobei das Kraftstoffregelungssystem ferner ein Kraftstoffabsperrventil (36) aufweisen kann, das, wenn die bestimmte Leistungsabgabe den Leistungsschwellenwert übersteigt, durch die Steuereinheit (38) angewiesen werden kann, die Reduzierung des dem Motor zugeführten Kraftstoffs in Form einer Unterbrechung der Kraftstoffzufuhr im Notfall zu implementieren.

12. Gasturbinenmotor mit einem Kernmotor (2), der mindestens eine Kernmotorspule umfasst, worin ein Kompressor (4) und eine Turbine (6) durch eine Welle (8) miteinander verbunden sind, und ferner ein Kraftstoffregelungssystem nach einem der vorstehenden Ansprüche umfassend.

13. Verfahren zur Regelung des einem Gasturbinenmotor zugeführten Kraftstoffs, wobei der Motor einen Kernmotor (2) umfasst, der mindestens eine Kernmotorspule umfasst, worin ein Kompressor (4) und eine Turbine (6) durch eine Welle (8) miteinander verbunden sind, wobei das Verfahren folgendes aufweist:
Bestimmen einer Leistungsabgabe des Motors;
Messen der Änderungsrate der Drehzahl der Kernmotorspule;
Anpassen des Leistungsschwellenwerts als eine Funktion der gemessenen Änderungsrate der Geschwindigkeit der Kernmotorspule;
Vergleichen der bestimmten Leistungsabgabe mit der Höhe des Leistungsschwellenwerts; und
Reduzieren der Kraftstoffzufuhr an den Motor, wenn die bestimmte Leistungsabgabe den Leistungsschwellenwert übersteigt.

## Revendications

1. Système de régulation de carburant pour une turbine à gaz ayant un bloc réacteur (2) comprenant au moins un corps de bloc réacteur dans lequel un compresseur (4) et une turbine (6) sont interconnectés par un arbre (8), le système comprenant :
une soupape de dosage (34) permettant de réguler la vitesse à laquelle le carburant sous pression est amené à une chambre de combustion du moteur, lorsque le système de régulation de carburant est installé et en service ;
un premier capteur de moteur (42) qui détermine une puissance de sortie du moteur ;
une unité de régulation (38) qui est conçue pour comparer la puissance de sortie déterminée avec une valeur de seuil de puissance, et pour commander une réduction du carburant fourni au moteur lorsque la puissance de sortie déterminée dépasse la valeur de seuil de puissance ; et
un second capteur de moteur (44) qui mesure le taux de variation de la vitesse de rotation du corps de bloc réacteur ;
**caractérisé en ce que**
l'unité de régulation (38) est en outre conçue pour ajuster la valeur de seuil de puissance en fonction du taux mesuré de variation de vitesse du corps de bloc réacteur.

2. Système de régulation de carburant selon la revendication 1, le moteur étant un turbopropulseur ayant en outre une hélice (22) entraînée par une bobine basse pression comprenant une turbine libre (26) et un arbre (28) qui transmet la puissance de la turbine libre (26) à l'hélice (22).

3. Système de régulation de carburant selon la revendication 2, le premier capteur de moteur (42) déterminant la puissance de sortie du moteur en mesurant la torsion de l'arbre (28) du corps basse pression, et en mesurant la vitesse de rotation du corps basse pression.

4. Système de régulation de carburant selon l'une quelconque des revendications précédentes, l'unité de régulation (38) étant conçue pour ajuster la valeur de seuil de puissance en augmentant la valeur de seuil de puissance lorsque le taux mesuré de variation de vitesse du corps de bloc réacteur est nul ou négatif.

5. Système de régulation de carburant selon la revendication 4, l'augmentation étant une variation progressive de la valeur de seuil de puissance à un taux de changement de vitesse nul ou à un taux de changement de vitesse négatif prédéfini.

6. Système de régulation de carburant selon l'une quelconque des revendications précédentes, l'unité de régulation (38) étant conçue pour ajuster la valeur de seuil de puissance en diminuant la valeur de seuil de puissance lorsque le taux mesuré de variation de vitesse du corps de bloc réacteur est supérieur à un taux de variation de vitesse positif prédéfini.

7. Système de régulation de carburant selon la revendication 6, la diminution étant une variation progressive de la valeur de seuil de puissance au taux positif prédéfini de variation de vitesse.

8. Système de régulation de carburant selon l'une quelconque des revendications précédentes, les ajustements de la valeur de seuil de puissance étant réversibles, excepté que l'unité de régulation (38) est conçue pour empêcher d'autres ajustements de la valeur de seuil de puissance en fonction du taux mesuré de variation de vitesse du corps de bloc réacteur lorsque la puissance de sortie déterminée dépasse la valeur de seuil de puissance.

9. Système de régulation de carburant selon l'une quelconque des revendications précédentes, le bloc réacteur (2) comprenant un corps de bloc réacteur haute pression et un corps de bloc réacteur de pression intermédiaire.

10. Système de régulation de carburant selon la revendication 9, le second capteur de moteur (44) mesurant le taux de changement de vitesse du corps de bloc réacteur haute pression ou du corps de bloc réacteur de pression intermédiaire.

11. Système de régulation de carburant selon l'une quelconque des revendications précédentes, le système de régulation de carburant pouvant en outre comprendre un robinet d'arrêt carburant (36) pouvant être commandé par l'unité de régulation (38) lorsque la puissance de sortie déterminée dépasse la valeur de seuil de puissance pour réaliser la réduction du carburant fourni au moteur sous la forme d'une coupure de carburant d'urgence.

12. Turbine à gaz ayant un bloc réacteur (2) comprenant au moins un corps de bloc réacteur dans lequel un compresseur (4) et une turbine (6) sont interconnectés par un arbre (8), et comprenant en outre un système de régulation de carburant selon l'une des revendications précédentes.

13. Procédé de commande du carburant fourni à une turbine à gaz ayant un bloc réacteur (2) comprenant au moins un corps de bloc réacteur dans lequel un compresseur (4) et une turbine (6) sont interconnectés par un arbre (8), le procédé comprenant les étapes consistant à :
déterminer une puissance de sortie du moteur ;
mesurer le taux de variation de vitesse de rotation du corps de bloc réacteur ;
ajuster une valeur de seuil de puissance en fonction du taux mesuré de variation de vitesse du corps de bloc réacteur ;
comparer la puissance de sortie déterminée à la valeur de seuil de puissance, et
réduire la quantité de carburant fournie au moteur lorsque la puissance de sortie déterminée dépasse la valeur de seuil de puissance.
